# EUROPÄISCHE PATENTSCHRIFT

(11) **EP 4 035 535 B1**
(45) Veröffentlichungstag und Bekanntmachung des Hinweises auf die Patenterteilung: **20.08.2025**
(21) Anmeldenummer: 21213320.1
(22) Anmeldetag: 09.12.2021
(51) Int. Cl.: A23G 3/34, A23G 3/02

(54) **GEREGELTES STRANGPRESSEN VON SÜSSWARENMASSEN**
CONTROLLED EXTRUSION OF CONFECTIONERY MATERIALS
EXTRUSION RÉGULÉE DE MASSES DE CONFISERIE

(30) Priorität: 01.02.2021 DE 102021102270
(43) Veröffentlichungstag der Anmeldung: 03.08.2022
(73) Patentinhaber: Sollich KG, 32105 Bad Salzuflen (DE)
(72) Erfinder: Ellinghoven, Thomas, 32049 Herford (DE)
(74) Vertreter: REHBERG HÜPPE + PARTNER

(56) Entgegenhaltungen:
- EP-B1- 2 303 042
- FR-A1- 2 745 521
- US-A1- 2007 087 100
- US-A1- 2009 220 656

## Beschreibung

### TECHNISCHES GEBIET DER ERFINDUNG

Die Erfindung betrifft eine Süßwarenmassenextrudereinheit mit einer Mehrzahl von Süßwarenmassenextrudern zur Bildung einer Mehrzahl von Strängen aus Süßwarenmasse zur Ablage auf einer angetriebenen Fördereinrichtung beabstandet nebeneinander.

Derartige Süßwarenmassenextruder stellen einen Strang aus Süßwarenmasse mit einer definierten Geometrie zur Verfügung. Der Strang wird möglichst konstant von dem Süßwarenmassenextruder abgegeben, auf dem sich in einem Förderrichtungssinn ebenfalls möglichst konstant bewegenden Fördermedium (z. B. dem oberen Trum eines Förderbands) des Fördermittels abgelegt und stromabwärts zur Ausbildung der einzelnen Süßwarenprodukte zerschnitten.

Bei den Süßwarenprodukten kann es sich beispielsweise um Müsliriegel, Proteinriegel, Marzipanriegel, Karamellriegel, Nougatriegel oder andere Süßwarenriegel handeln, die z. B. später mit einer Schokolademasse überzogen werden.

### STAND DER TECHNIK

Ein Süßwarenmassenextruder zur Bildung eines Strangs aus Süßwarenmasse zur Ablage auf einer angetriebenen Fördereinrichtung ist aus der deutschen Patentanmeldung DE 199 36 827 A1 bekannt. Der Süßwarenmassenextruder weist eine Zuführeinrichtung, einen Kanal und eine Auslassdüse auf. Die Zuführeinrichtung dient zum Zuführen der Süßwarenmasse durch den Kanal zu der Auslassdüse. Die Auslassdüse dient zum Abgeben eines Volumenstroms der Süßwarenmasse auf die Fördereinrichtung. An dem Kanal oder an der Auslassdüse ist eine Messeinrichtung zum Ermitteln mindestens einer mit der Viskosität der Süßwarenmasse in Verbindung stehenden Messgröße angeordnet. Dabei kann es sich insbesondere um den Druck oder die Strömungsgeschwindigkeit der Süßwarenmasse handeln. Der Süßwarenmassenextruder weist weiterhin eine Einstellvorrichtung zur Einstellung der Größe des Volumenstroms und eine Steuereinrichtung auf. Die Steuereinrichtung bewirkt in Abhängigkeit von der durchgeführten Messung eine Änderung des Volumenstroms durch die Einstellvorrichtung, um diesen möglichst konstant zu halten.

Süßwarenmassenextrudereinheiten mit einem Süßwarenmassenextruder, der eine Auslassdüse zum Abgeben eines Volumenstroms der Süßwarenmasse, eine Einstellvorrichtung zur Einstellung der Größe des Volumenstroms, eine Messeinrichtung zur Erfassung eines Istwerts eines geometrischen Merkmals des Strangs auf der Fördereinrichtung, und eine Regeleinrichtung aufweist, in die der Istwert eingeht, wobei die Regeleinrichtung den Istwert mit einem vorgegebenen Sollwert vergleicht und in Abhängigkeit von einer Abweichung des Istwerts von dem Sollwert einen Befehl zum Verändern der Größe des Volumenstroms an die Einstellvorrichtung sendet, sind aus der US 2009/220656 A1, der EP 2 303 042 B1, der US 2007/087100 A1 und der FR 2 745 521 A1 bekannt. Diese Süßwarenmassenextrudereinheiten weisen jeweils einen einzigen geregelten Süßwarenmassenextruder auf.

### AUFGABE DER ERFINDUNG

Der Erfindung liegt die Aufgabe zugrunde, eine Süßwarenmassenextrudereinheit bereitzustellen, mit der in einfacher, zuverlässiger und konstanter Weise eine Mehrzahl von Strängen aus Süßwarenmasse mit den gewünschten geometrischen Merkmalen erzeugt werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Süßwarenmassenextrudereinheit mit einer Mehrzahl von Süßwarenmassenextrudern zur Bildung einer einer Mehrzahl von Strängen aus Süßwarenmasse zur Ablage auf einer angetriebenen Fördereinrichtung beabstandet nebeneinander. Jeder Süßwarenmassenextruder weist eine Auslassdüse zum Abgeben eines Volumenstroms der Süßwarenmasse und eine Einstellvorrichtung zur Einstellung der Größe des Volumenstroms auf. Der Süßwarenmassenextruder weist weiterhin eine Messeinrichtung und Regeleinrichtung auf. Die Messeinrichtung dient zur Erfassung eines Istwerts eines geometrischen Merkmals des Strangs auf der Fördereinrichtung. Die Regeleinrichtung, in die der Istwert eingeht, vergleicht den Istwert mit einem vorgegebenen Sollwert und sendet in Abhängigkeit von einer Abweichung des Istwerts von dem Sollwert einen Befehl zum Verändern der Größe des Volumenstroms an die Einstellvorrichtung.

Die Süßwarenmassenextrudereinheit weist z. B. zwei, drei, vier, fünf, sechs, acht, zehn, zwölf oder mehr Süßwarenmassenextruder auf.

Ein jeder Süßwarenmassenextruder dient zur kontinuierlichen Abgabe eines definierten Volumenstroms einer Süßwarenmasse aus einem Süßwarenmassenreservoir während der Herstellung von Süßwaren. Bei der Süßwarenmasse handelt es sich insbesondere um eine Fett und/oder Zucker und/oder Zuckerersatzstoffe enthaltende Masse. Beispiele hierfür sind Müslimassen, Proteinmassen, Marzipan, Karamell, Nougat und Fondant. Die Süßwarenmasse liegt in zähflüssiger Form vor und bildet einen zunächst endlosen Strang auf dem Fördermittel. Der Strang wird stromabwärts zur Erzeugung der einzelnen Süßwarenprodukte quergeschnitten.

Bei den Süßwarenmassenextrudern der neuen Süßwarenmassenextrudereinheit wird die Istgeometrie des erzeugten Strangs an Süßwarenmasse analysiert, wie diese vorliegt, nachdem der Strang auf dem im Förderrichtungssinn bewegten Fördermittel der Fördereinrichtung abgelegt wurde. Wenn es sich bei der Fördereinrichtung um ein umlaufend angetriebenes Förderband handelt, stellt das obere Trum des Förderbands dieses Fördermittel dar. Entsprechendes gilt beispielsweise bei einem umlaufend angetriebenen Gitterband.

Bei dieser Regelung wird also kein Merkmal der Süßwarenmasse stromaufwärts der Auslassdüse, in der Auslassdüse oder direkt stromabwärts der Auslassdüse analysiert. Es handelt sich auch um kein sekundäres Merkmal wie den Druck oder die Strömungsgeschwindigkeit der Süßwarenmasse. Stattdessen wird das primäre Merkmal der Süßwarenmasse analysiert, um das es letztendlich bei der Bildung derartiger Stränge aus Süßwarenmasse geht, nämlich die Geometrie bzw. die Abmaße des abgelegten Strangs.

Dieses geometrische Merkmal wird mittels der Messeinrichtung erfasst. Der erfasste Istwert geht in den Regelkreis der elektronischen Regeleinrichtung ein. Die Regeleinrichtung vergleicht den Istwert mit einem vorgegebenen Sollwert. Unter einem solchen Sollwert ist auch eine Mehrzahl vorgegebener Sollwerte - insbesondere ein Minimalwert und ein Maximalwert - oder ein Sollwertbereich zu verstehen. Wenn die Abweichung des Istwerts von dem Sollwert einen vorgegebenen einstellbaren oberen Grenzwert oder Bereich überschreitet, gibt die Regeleinrichtung einen Befehl zum Verringern der Größe des Volumenstroms an die Einstellvorrichtung aus. Die Einstellvorrichtung verändert daraufhin automatisch ihr Merkmal, welches die Größe des Volumenstroms der Süßwarenmasse bestimmt. Dabei handelt es sich insbesondere um eine Durchtrittsquerschnittsfläche für die Süßwarenmasse. Entsprechend Umgekehrtes gilt bei eine Unterschreitung.

Das durch die Süßwarenmassenextruder der neuen Süßwarenmassenextrudereinheit bereitgestellte geregelte Strangpressen von Süßwarenmassen setzt also im Gegensatz zum Stand der Technik nicht relativ am Anfang des Verfahrens, sondern später am bereits gebildeten Strang aus Süßwarenmasse an. Dies hat den Vorteil, dass verschiedene Einflussgrößen, die für die Ausbildung des Strangs mitverantwortlich sind, automatisch berücksichtigt werden und nicht separat analysiert werden müssen.

Es ist zu beachten, dass die Geometrie des erzeugten Strangs nicht nur von der Größe des Volumenstroms der Süßwarenmasse, die durch die Auslassdüse abgegeben wird, sondern auch von der Geschwindigkeit des Fördermediums der Fördereinrichtung abhängt. Wenn sich also beispielsweise die Fördergeschwindigkeit des Fördermediums der Fördereinrichtung erhöht, muss bereits daher der Volumenstrom der Süßwarenmasse erhöht werden, um den Strang konstant auszubilden. Wenn sich nun aber gleichzeitig die Strömungsgeschwindigkeit der Süßwarenmasse in der Auslassdüse aufgrund einer geänderten Konsistenz der Süßwarenmasse geändert hat, muss auch dies in die Regelung einfließen. Die Regelung wird hierdurch vergleichsweise komplex.

Diese Probleme werden erfindungsgemäß dadurch vermieden, dass auf die Geometrie des bereits erzeugten Strangs abgestellt wird. Es ist dann unerheblich, ob eine Abweichung des Istwerts von dem Sollwert der Geometrie des Strangs darauf zurückzuführen ist, ob sich die Fördergeschwindigkeit des Fördermediums oder die Konsistenz oder der Druck der Süßwarenmasse geändert hat. In allen Fällen wird der Volumenstrom der Süßwarenmasse mittels der Einstellvorrichtung so vergrößert oder reduziert, dass der Istwert des geometrischen Merkmals des Strangs auf der Fördereinrichtung innerhalb des akzeptierten Toleranzbereichs bleibt oder in diesen zurückgeführt wird.

Mit der Messeinrichtung wird die Form bzw. die Abmaße des Strangs analysiert, wie dieser auf der Fördereinrichtung gebildet ist. Die Messeinrichtung kann eine optische Messeinrichtung sein. Mit einer solchen optischen Messeinrichtung kann das analysierte geometrische Merkmal des Strangs auf der Fördereinrichtung einfach und verlässlich festgestellt werden. Es ist aber auch möglich, dass es sich bei der Messeinrichtung um eine solche handelt, die ein Ultraschallverfahren oder ein Röntgenverfahren nutzt.

Bei der Messeinrichtung kann es sich insbesondere um eine Lasertriangulationsvorrichtung handeln. Mit einer solchen Lasertriangulationsvorrichtung kann das festgelegte geometrische Merkmal des Strangs auf der Fördereinrichtung besonders einfach und verlässlich gemessen werden. Es kann sich aber auch um eine andere optische Messeinrichtung mit einer oder mehreren Kameras und/oder Objektiven und einer Bildauswerteeinheit handeln.

Die Einstellvorrichtung kann so ausgebildet und angeordnet sein, dass die Einstellung der Größe des Volumenstroms während des Betriebs des Süßwarenmassenextruders möglich ist. Wenn also der gemessene Istwert des geometrischen Merkmals des Strangs nicht im zulässigen Toleranzbereich liegt, müssen der Süßwarenmassenextruder und die Fördereinrichtung nicht angehalten werden. Stattdessen erfolgt die Einstellung automatisch im laufenden Betrieb beider Vorrichtungen. Somit entstehen keine Stillstandszeiten. Der Toleranzbereich wird dabei insbesondere so gewählt, dass ein gewisser Zeitversatz zwischen der Feststellung der Abweichung und der Beseitigung der Abweichung durch die Einstellvorrichtung berücksichtigt wird.

Die Einstellvorrichtung kann einen beweglichen Drosselschieber aufweisen, dessen Position zur Einstellung der Größe des Volumenstroms veränderbar ausgebildet ist. Der Drosselschieber ist im Bereich einer freien Durchtrittsquerschnittsfläche des Süßwarenmassenextruders stromaufwärts der Auslassdüse angeordnet. In der vollständig zurückgezogenen Stellung des Drosselschiebers steht damit die gesamte freie Durchtrittsquerschnittsfläche für den Durchfluss der Süßwarenmasse zur Verfügung. Der Volumenstrom ist dann maximiert oder - unter Berücksichtigung des Drucks - zumindest maximierbar. Wenn nun der Drosselschieber seine Position verändert und hinein gefahren wird, verringert der Drosselschieber die freie Durchtrittsquerschnittsfläche. Hierdurch wird der Volumenstrom verringert.

Andere Ausbildungen Einstellvorrichtung sind ebenfalls möglich. So kann die Einstellvorrichtung z. B. einen Drehkolben aufweisen oder als Sitzventil oder anderes geeignetes Ventil ausgebildet sein.

Die Einstellvorrichtung kann ein durch Druck beaufschlagtes Ventil aufweisen. Die Druckbeaufschlagung erfolgt dabei durch ein Druckmedium. Bei dem Druckmedium kann es sich um ein Gas oder eine Flüssigkeit handeln. Beispielsweise handelt es sich um Luft, Wasser oder Öl. Durch die Druckbeaufschlagung ist der durch die Einstellvorrichtung zu bestimmende Volumenstrom an Süßwarenmasse exakt und schnell einstellbar. Der Volumenstrom wird durch eine Änderung der freien Querschnittsfläche des Ventils definiert, die für den Durchfluss der Süßwarenmasse zur Verfügung steht. Bei einem tendenziellen Öffnen der Einstellvorrichtung wird diese freie Querschnittsfläche also vergrößert. Bei einem tendenziellen Schließen der Einstellvorrichtung wird diese freie Querschnittsfläche verkleinert. Durch eine Änderung der Querschnittsfläche von etwa ± 3 % bis 30 %, insbesondere etwa ± 5 % bis 20 %, insbesondere etwa ± 10 % bis 15 %, lässt sich häufig die gewünschte und benötigte Einstellung der Einstellvorrichtung realisieren.

Wenn es sich bei dem Druckmedium um Luft handelt, kann der normalerweise an der Einstellvorrichtung anliegende Druck etwa 0,4 bar bis 0,7 bar, insbesondere etwa 0,5 bar, betragen. Die Variierung des Drucks zur Einstellung der Einstellvorrichtung beträgt dann z. B. etwa ± 0,3 bar.

Die Einstellvorrichtung kann ein Schlauchquetschventil aufweisen. Ein derartiges Schlauchquetschventil ist gut dafür geeignet, durch eine Variierung des Drucks in der oberhalb beschriebenen Weise den freien Querschnitt der Einstellvorrichtung schnell und exakt einzustellen. Ein derartiges Schlauchquetschventil weist ein Gehäuse auf, in das ein aus einem nachgiebigen Material bestehendes Schlauchstück eingesetzt ist. In dem Gehäuse ist ein Druckraum vorhanden, der druckmäßig beaufschlagt werden kann. Das Schlauchstück wird dann in Abhängigkeit von dem in dem Druckraum anstehenden Druck mehr bzw. weniger gequetscht, so dass sich der freie Querschnitt verkleinert bzw. vergrößert.

Die Elastomermembran des Schlauchquetschventils kann insbesondere als Silikon-Spritzgussteil ausgebildet sein. Andere Materialien und Herstellungsverfahren sind aber ebenfalls möglich.

Das geometrische Merkmal, das mittels der Messeinrichtung erfasst wird, kann die Breite und/oder Höhe und/oder Querschnittsgeometrie des Strangs sein.

Die Breite des Strangs wird optisch anhand des optischen Unterschieds zwischen der Oberfläche des Fördermittels (beispielsweise des Förderbands) der Fördereinrichtung und der Süßwarenmasse erkannt. Der Sollwert der Breite kann z. B. 2,00 cm sein. Wenn der gemessene Istwert z. B. kleiner als 1,90 cm oder größer als 2,10 cm ist, wird ein entsprechendes Änderungssignal von der Regeleinrichtung an die Einstellvorrichtung gesendet und deren freier Durchtrittsquerschnitt vergrößert bzw. reduziert.

Wenn die Höhe (= Dicke) des Strangs festgestellt werden soll, kann dies in verschiedener Weise realisiert sein. Eine Möglichkeit besteht darin, die Höhe des Strangs jeweils in der Mitte seiner Breite zu messen. Die Höhe kann aber auch an einer anderen definierten Stelle oder mehreren definierten Stellen der Breite des Fördermittels gemessen werden, z. B. an beiden Seiten außen oder bei 1/3 und 2/3 der Breite. Eine andere Möglichkeit ist das Messen der Höhe des Strangs an einer oder mehreren definierten Stellen entlang der Breite des Fördermittels. Diese verschiedenen Möglichkeiten können auch miteinander kombiniert werden.

Die Regeleinheit ist als elektronische Regeleinheit ausgebildet und weist eine Bedienerschnittstelle (HMI; "Human Machine Interface") auf, über die der Bediener die notwendigen Einstellungen vornehmen kann.

In der neuen Süßwarenmassenextrudereinheit ist eine Mehrzahl von Süßwarenmassenextrudern miteinander kombiniert, um mehrere Stränge an Süßwarenmasse gleichzeitig zu erzeugen, die beabstandet nebeneinander auf der Fördereinrichtung abgelegt und gemeinsam abtransportiert werden. In der Süßwarenmassenextrudereinheit können z. B. acht, zehn oder mehr Stränge gleichzeitig erzeugt werden.

Die Süßwarenmassenextrudereinheit kann eine gemeinsame Regeleinrichtung für die in ihr enthaltenen mehreren Süßwarenmassenextruder aufweisen. Somit ist es möglich, den Istwert des geometrischen Merkmals der mehreren Stränge mittels der gemeinsamen Regeleinrichtung aneinander anzugleichen. Die Regelung kann so ausgeführt sein, dass die Stränge möglichst übereinstimmen. Es ist aber auch möglich, dass die Süßwarenmassenextruder in der Süßwarenmassenextrudereinheit unterschiedlich eingestellt und geregelt werden, so dass diese unterschiedliche Stränge ausbilden. In diesem Fall ist dann also nicht die Übereinstimmung der Stränge untereinander, sondern die Beibehaltung der Unterschiede zwischen den Strängen angestrebt.

Es ist aber auch möglich, dass jeder Süßwarenmassenextruder in der Süßwarenmassenextrudereinheit seine eigene separate Regeleinrichtung aufweist.

Die Süßwarenmassenextrudereinheit weist eine die Süßwarenmasse aufnehmende gemeinsame Druckkammer der Mehrzahl von Süßwarenmassenextrudern auf. Die Druckkammer dient zur Bereitstellung der Süßwarenmasse, wobei die Süßwarenmasse unter einem gewissen Überdruck steht. Der Druck in der Süßwarenmasse ist also höher als der die Süßwarenmasseneinheit umgebende Atmosphärendruck.

Die Süßwarenmassenextrudereinheit kann weiterhin gegensinnig angetriebene Förderwalzen aufweisen. Die Druckkammer weist einen Einlass und einen Auslass auf. Der Auslass wird durch die Auslassdüsen gebildet. Im vorliegenden Fall wird der Einlass durch die Förderwalzen gebildet. Durch eine Veränderung der Drehzahl der angetriebenen Förderwalzen ist der Überdruck in der Druckkammer einstellbar. Für eine automatische Einstellung kann der Druck in der Druckkammer gemessen und bei einer Abweichung von einem Sollwertbereich die Drehzahl der angetriebenen Förderwalzen entsprechend erhöht oder reduziert werden. Auch dies kann im Sinne einer automatischen Regelung erfolgen.

In der Praxis ergibt sich oftmals eine Druckdifferenz über die Breite der Druckkammer gesehen. Damit herrscht ein unterschiedlicher Druck im Bereich der Zuführung des jeweiligen Süßwarenmassenextruders. Bei einem geringeren Druck resultiert ein geringerer Volumenstrom. Dieser geringere Volumenstrom führt zu einem weniger breiten und/oder hohen Strang der Süßwarenmasse auf der Fördereinrichtung. Diese Abweichung des resultierenden Strangs wird anhand des geometrischen Merkmals mittels der Messeinrichtung festgestellt und durch eine Veränderung der Einstellvorrichtung zur Vergrößerung der freien Durchtrittsquerschnittsfläche ausgeglichen.

Bei bestimmten unterschiedlichen Süßwarenmassen ergeben sich unterschiedliche Stränge bei unveränderter Einstellvorrichtung. In der Regeleinrichtung können daher süßwarenmassespezifische Werte berücksichtigt werden, so dass die Abweichung des Strangs vom Sollwert nach einem Massewechsel und einem Neuanfahren des Süßwarenmassenextruders minimiert wird.

Mittels der optischen Messeinrichtung kann auch die Position des Strangs auf dem Fördermittel der Fördereinrichtung festgestellt werden. Bei einer Abweichung von einem Toleranzbereich kann eine Fehlermeldung ausgegeben oder eine automatische Ausrichtung des Süßwarenmassenextruders relativ zu dem Fördermittel durchgeführt werden.

Die Regelung erfolgt automatisiert und unter Verwendung einer elektrischen bzw. elektronischen Regeleinheit. Auch die Messung und die Einstellung erfolgt dabei automatisiert. Es handelt sich somit insgesamt um ein für die industrielle Produktion von Süßwaren bestimmtes Verfahren.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Einstellvorrichtung die Rede ist, ist dies so zu verstehen, dass genau eine Einstellvorrichtung, zwei Einstellvorrichtungen oder mehr Einstellvorrichtungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Querschnittsansicht einer ersten beispielhaften Ausführungsform eines Süßwarenmassenextruders.
- **Fig. 2**: zeigt ein Ablaufdiagramm des Regelverfahrens der Regeleinrichtung des Süßwarenmassenextruders.
- **Fig. 3**: zeigt eine Querschnittsansicht einer zweiten beispielhaften Ausführungsform des Süßwarenmassenextruders.

### FIGURENBESCHREIBUNG

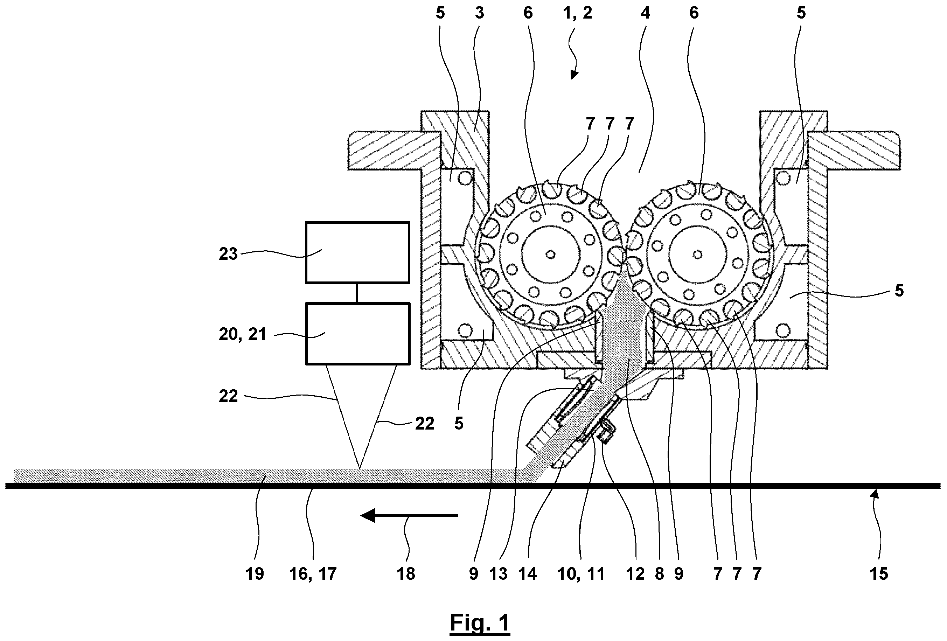

Fig. 1 zeigt eine Querschnittsansicht einer ersten beispielhaften Ausführungsform eines Süßwarenmassenextruders 1.

Der Süßwarenmassenextruder 1 ist Teil einer Süßwarenmassenextrudereinheit 2, die weitere Süßwarenmassenextruder 1 aufweist. Diese weiteren Süßwarenmassenextruder 1 befinden sich in der in Fig. 1 dargestellten Querschnittsansicht hinter dem dargestellten Süßwarenmassenextruder 1 und sind nicht dargestellt. Die Süßwarenmassenextrudereinheit 2 weist z. B. zwei, drei, vier, fünf, sechs, acht, zehn, zwölf oder mehr Süßwarenmassenextruder 1 auf.

Die Süßwarenmassenextrudereinheit 2 weist ein Gehäuse 3 auf, in dessen Inneren ein Aufnahmeraum 4 für Süßwarenmasse gebildet ist. In dem Gehäuse 3 sind Heizkammern 5 vorhanden, in denen sich warmes Wasser oder ein anderes Heizmedium befindet bzw. durch die dieses strömt, um die in dem Aufnahmeraum 4 aufgenommene Süßwarenmasse zu beheizen bzw. auf einer bestimmten Temperatur zu halten.

In dem Aufnahmeraum 4 sind weiterhin zwei angetriebene Förderwalzen 6 angeordnet. Die Förderwalzen 6 weisen jeweils eine Mehrzahl von auf Ihrem äußeren Umfang angeordneten Drehstäben 7 auf. Die Förderwalzen 6 sind gegenläufig angetrieben, wobei in der in Fig. 1 dargestellten Ansicht die linke Förderwalze im Uhrzeigersinn und die rechte Förderwalze im Gegenuhrzeigersinn angetrieben ist. In dieser Weise wird die sich im Aufnahmeraum 4 befindende Süßwarenmasse gefördert und unter Überdruck gesetzt. Dabei gelangt die Süßwarenmasse in eine Druckkammer 8. Während die Süßwarenmasse in dem Aufnahmeraum 4 außerhalb der Druckkammer 8 aus Gründen der Übersichtlichkeit nicht dargestellt ist, ist die Süßwarenmasse in der Druckkammer 8 und stromabwärts grauer dargestellt. In der Druckkammer 8 sind weiterhin Abstreifer 9 angeordnet, mit denen die Süßwarenmasse von den Förderwalzen 6 abgenommen wird.

Die Druckkammer 8 ist eine gemeinsame Druckkammer der Mehrzahl von Süßwarenmassenextrudern 1. Ein eigenes Teil jedes Süßwarenmassenextruders 1 ist hingegen das nun im Folgenden beschriebene, stromabwärts angeordnete Bauteil. Bei diesem Bauteil handelt es sich um eine Einstellvorrichtung 10 zur Einstellung der Größe des durch diese hindurchströmenden Volumenstroms an Süßwarenmasse.

Bei der in Fig. 1 dargestellten Ausführungsform weist die Einstellvorrichtung 10 ein durch Druck beaufschlagtes Schlauchquetschventil 11 auf. Das Schlauchquetschventil 11 weist einen Anschluss 12 auf, über den ein Druckmedium, insbesondere Luft oder eine Flüssigkeit, in den Innenraum des Schlauchquetschventils 11 gelangt. Dort ist eine Druckzelle gebildet, über die ein einstellbarer Druck auf einen Schlauchabschnitt 13 einwirkt. Je nach Druckniveau verengt oder erweitert dann der Schlauchabschnitt 13 die für den Durchfluss der Süßwarenmasse zur Verfügung stehende freie Querschnittsfläche. In dieser Weise wird der Volumenstrom der Süßwarenmasse eingestellt.

Stromabwärts der Einstellvorrichtung 10 weist der Süßwarenmassenextruder 1 eine Auslassdüse 14 zum Abgeben des Volumenstroms der Süßwarenmasse auf. Die Süßwarenmasse gelangt dann stromabwärts der Auslassdüse 14 in den Bereich einer Fördereinrichtung 15. Die Fördereinrichtung 15 ist in Fig. 1 nur schematisch dargestellt. Die Fördereinrichtung 15 weist ein Förderband 16 auf, das umlaufend angetrieben ist. Das obere Trum 17 des Förderbands 16 wird dabei im Bereich des Süßwarenmassenextruders 1 in einem Förderrichtungssinn 18 bewegt.

Die die Auslassdüse 14 verlassende Süßwarenmasse bildet dabei einen Strang 19 auf dem oberen Trum 17. Der zunächst endlos ausgebildete Strang 19 wird im Förderrichtungssinn 18 abtransportiert und stromabwärts zur Bildung einzelner Süßwarenprodukte quergeschnitten und ggf. weiterverarbeitet.

Der Süßwarenmassenextruder 1 weist weiterhin eine Messeinrichtung 20 zur Erfassung eines Istwerts eines geometrischen Merkmals des Strangs 19 auf der Fördereinrichtung 15 auf. Im dargestellten Beispiel handelt es sich bei der Messeinrichtung 20 um einer Lasertriangulationsvorrichtung 21, was durch die symbolisch dargestellten Laserstrahlen 22 kenntlich gemacht ist. Es könnte sich aber auch um eine andere optische oder sonstige geeignete Messeinrichtung 20 handeln.

Der Süßwarenmassenextruder 1 weist weiterhin eine Regeleinrichtung 23 auf, die in Fig. 1 ebenfalls symbolisch dargestellt und elektrisch mit der Messeinrichtung 20 verbunden ist. Der von der Messeinrichtung 20 erfasste Istwert des geometrischen Merkmals des Strangs 19 auf der Fördereinrichtung 15 geht in die Regeleinrichtung 23 ein. Die Regeleinrichtung 23 vergleicht den Istwert mit einem vorgegebenen Sollwert. In Abhängigkeit von einer Abweichung des Istwerts von dem Sollwert sendet die Regeleinrichtung 23 einen Befehl zum Verändern der Drosselstellung der Einstellvorrichtung 10 und somit der resultierenden Größe des Volumenstroms der Süßwarenmasse an die Einstellvorrichtung 10.

Durch das Zusammenwirken der Messeinrichtung 20, der Regeleinrichtung 23 und der Einstellvorrichtung 10 wird die Geometrie des auf der Fördereinrichtung 15 befindlichen Strangs 19 aus Süßwarenmasse in der gewünschten Weise geregelt. Somit wird sichergestellt, dass der Strang 19 die gewünschten Abmaße beibehält oder - nach dem Eintreten einer unerwünschten Abweichung - zurück erhält.

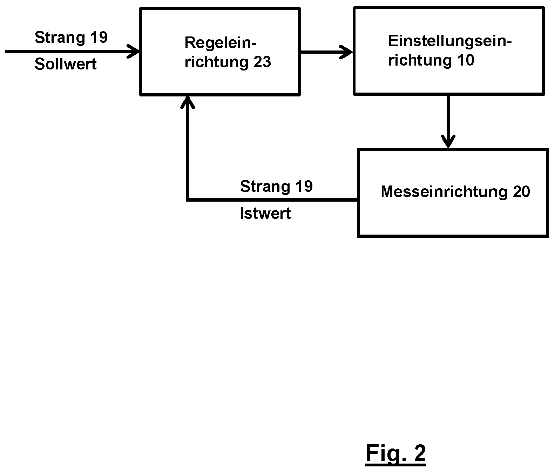

Der der Regeleinrichtung 23 zugrundeliegende Regelkreis ist in Fig. 2 dargestellt. Der Sollwert des geometrischen Merkmals des Strangs 19 wird in die Regeleinrichtung 23 eingegeben oder ist in dieser bereits hinterlegt. Die Produktion wird gestartet. Mittels der Messeinrichtung 20 wird der Istwert des Strangs 19 gemessen und als Messsignal an die Regeleinrichtung 23 gesendet. Dort findet der Vergleich zwischen Istwert und Sollwert unter Berücksichtigung bestimmter Wertebereiche oder Toleranzen statt. Bei einer einen gewissen Grenzwert überschreitenden Abweichung wird von der Regeleinrichtung 23 ein Änderungssignal an die Einstellvorrichtung 10 gesendet, die daraufhin ihre Drosselstellung zur Veränderung der Größe des Volumenstroms ändert.

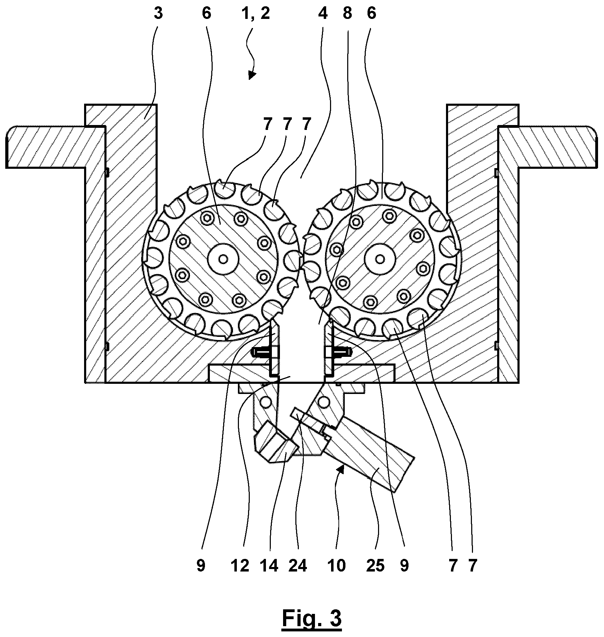

Fig. 3 zeigt eine mit Fig. 1 vergleichbare Ansicht einer zweiten beispielhaften Ausführungsform der Süßwarenmassenextrudereinheit 1. Bezüglich der übereinstimmenden Merkmale wird zwecks Vermeidung unnötiger Wiederholungen auf die oberhalb angegebenen Ausführungen verwiesen. In Fig. 3 sind die Fördereinrichtung und die Süßwarenmasse nicht dargestellt.

Bei dieser Ausführungsform des Süßwarenmassenextruders 1 ist die Einstellvorrichtung 10 anders ausgebildet. Die Einstellvorrichtung 10 weist einen beweglichen Drosselschieber 24 auf, dessen Position mittels eines Stellmotors 25 veränderbar ist. Der Drosselschieber 24 kann also aufgrund einer Betätigung des Stellmotors 25 zur Verringerung der freien Durchtrittsquerschnittsfläche in die Druckkammer 8 hinein bzw. zur Vergrößerung der freien Durchtrittsquerschnittsfläche aus der Druckkammer 8 herausgefahren werden.

### BEZUGSZEICHENLISTE

- 1: Süßwarenmassenextruder
- 2: Süßwarenmassenextrudereinheit
- 3: Gehäuse
- 4: Aufnahmeraum
- 5: Heizkammer
- 6: Förderwalze
- 7: Drehstab
- 8: Druckkammer
- 9: Abstreifer
- 10: Einstellvorrichtung
- 11: Schlauchquetschventil
- 12: Anschluss
- 13: Schlauchabschnitt
- 14: Auslassdüse
- 15: Fördereinrichtung
- 16: Förderband
- 17: oberes Trum
- 18: Förderrichtungssinn
- 19: Strang
- 20: Messeinrichtung
- 21: Lasertriangulationsvorrichtung
- 22: Laserstrahl
- 23: Regeleinrichtung
- 24: Drosselschieber
- 25: Stellmotor

## Patentansprüche

1. Süßwarenmassenextrudereinheit (2) mit einer Mehrzahl von Süßwarenmassenextrudern (1) zur Bildung einer Mehrzahl von Strängen (19) aus Süßwarenmasse zur Ablage auf einer angetriebenen Fördereinrichtung (15) beabstandet nebeneinander, wobei jeder Süßwarenmassenextruder (1)
eine Auslassdüse (14) zum Abgeben eines Volumenstroms der Süßwarenmasse,
eine Einstellvorrichtung (10) zur Einstellung der Größe des Volumenstroms,
eine Messeinrichtung (20) zur Erfassung eines Istwerts eines geometrischen Merkmals des Strangs (19) auf der Fördereinrichtung (15) und
eine Regeleinrichtung (23), in die der Istwert eingeht, wobei die Regeleinrichtung (23) den Istwert mit einem vorgegebenen Sollwert vergleicht und in Abhängigkeit von einer Abweichung des Istwerts von dem Sollwert einen Befehl zum Verändern der Größe des Volumenstroms an die Einstellvorrichtung (10) sendet,
aufweist,
und mit einer die Süßwarenmasse aufnehmenden gemeinsamen Druckkammer (8) der Mehrzahl von Süßwarenmassenextrudern (1), wobei die Süßwarenmasse in der Druckkammer (8) unter Überdruck steht.

2. Süßwarenmassenextrudereinheit (2) nach Anspruch 1, **dadurch gekennzeichnet, dass** die Messeinrichtung (20) eine optische Messeinrichtung ist.

3. Süßwarenmassenextrudereinheit (2) nach Anspruch 1 oder 2, **dadurch gekennzeichnet, dass** die Messeinrichtung (20) eine Lasertriangulationsvorrichtung (21) ist.

4. Süßwarenmassenextrudereinheit (2) nach einem der vorhergehenden Ansprüche, **dadurch gekennzeichnet, dass** die Einstellvorrichtung (10) so ausgebildet und angeordnet ist, dass die Einstellung der Größe des Volumenstroms während des Betriebs des Süßwarenmassenextruders (1) möglich ist.

5. Süßwarenmassenextrudereinheit (2) nach einem der vorhergehenden Ansprüche, **dadurch gekennzeichnet, dass** die Einstellvorrichtung (10) einen beweglichen Drosselschieber (24) aufweist, dessen Position zur Einstellung der Größe des Volumenstroms veränderbar ausgebildet ist.

6. Süßwarenmassenextrudereinheit (2) nach einem der vorhergehenden Ansprüche, **dadurch gekennzeichnet, dass** die Einstellvorrichtung (20) ein Schlauchquetschventil (11) aufweist, dessen freie Durchtrittsquerschnittsfläche zur Einstellung der Größe des Volumenstroms veränderbar ausgebildet ist.

7. Süßwarenmassenextrudereinheit (2) nach einem der vorhergehenden Ansprüche, **dadurch gekennzeichnet, dass** das geometrischen Merkmal die Breite und/oder Höhe und/oder Querschnittsgeometrie des Strangs (19) ist.

8. Süßwarenmassenextrudereinheit (2) nach einem der vorhergehenden Ansprüche, **dadurch gekennzeichnet, dass** die Süßwarenmassenextruder (1) eine gemeinsame Regeleinrichtung (23) aufweisen.

9. Süßwarenmassenextrudereinheit (2) nach Anspruch 8, **dadurch gekennzeichnet, dass** die Regeleinrichtung (23) so ausgebildet ist, dass der Istwert des geometrischen Merkmals der Stränge (19) aneinander angeglichen wird.

10. Süßwarenmassenextrudereinheit (2) nach einem der vorhergehenden Ansprüche, **dadurch gekennzeichnet, dass** die Druckkammer (8) einen Einlass und einen Auslass aufweist, wobei der Einlass durch gegensinnig angetriebene Förderwalzen (6) und der Auslass durch die Auslassdüsen (14) gebildet wird.

## Claims

1. Confectionery mass extruder unit (2) comprising a plurality of confectionery mass extruders (1) for forming a plurality of strands (19) of confectionery mass for deposition on a driven conveyor device (15) spaced apart next to each other, each confectionery mass extruder (1) having
an outlet nozzle (14) for discharging a volume flow of the confectionery mass,
an adjustment device (10) for adjusting a rate of the volume flow,
a measuring device (20) for detecting an actual value of a geometric feature of the strand (19) on the conveyor device (15), and
a control device (23) into which the actual value is fed, the control device (23) comparing the actual value to a predetermined setpoint value and, depending on a deviation of the actual value from the setpoint value, sending a command for changing the rate of the volume flow to the adjusting device (10),
and
a common pressure chamber (8) of the plurality of confectionery mass extruders (1) for including the confectionery mass, the confectionery mass in the pressure chamber (8) being under overpressure.

2. Confectionery mass extruder unit (2) according to claim 1, **characterized in that** the measuring device (20) is an optical measuring device.

3. Confectionery mass extruder unit (2) according to claim 1 or 2, **characterized in that** the measuring device (20) is a laser triangulation device (21).

4. Confectionery mass extruder unit (2) according to any of the preceding claims, **characterized in that** the adjusting device (10) is configured and arranged such that the rate of the volume flow can be adjusted during operation of the confectionery mass extruder (1).

5. Confectionery mass extruder unit (2) according to any of the preceding claims, **characterized in that** the adjusting device (10) has a movable throttle slide (24) whose position is configured to be variable for adjusting the rate of the volume flow.

6. Confectionery mass extruder unit (2) according to any of the preceding claims, **characterized in that** the adjusting device (20) has a hose pinch valve (11) whose free passage cross-sectional area is configured to be variable for adjusting the volume flow rate.

7. Confectionery mass extruder unit (2) according to any of the preceding claims, **characterized in that** the geometric feature is the width and/or height and/or cross-sectional geometry of the strand (19).

8. Confectionery mass extruder unit (2) according to any of the preceding claims, **characterized in that** the confectionery mass extruders (1) have a common control device (23).

9. Confectionery mass extruder unit (2) according to claim 8, **characterized in that** the control device (23) is configured such that the actual values of the geometric feature of the strands (19) is adjusted to match each other.

10. Confectionery mass extruder unit (2) according to any of the preceding claims, **characterized in that** the pressure chamber (8) has an inlet and an outlet, the inlet being formed by counter-rotating feed rollers (6) and the outlet by the outlet nozzles (14).

## Revendications

1. Unité d'extrusion de masse de confiserie (2) comprenant une pluralité d'extrudeuses de masse de confiserie (1) pour former une pluralité de chaînes (19) de masse de confiserie destinées à être déposées, espacées les unes à côté des autres, sur un dispositif de convoyage à entraînement (15), chaque extrudeuse de masse de confiserie (1)
comportant une buse de sortie (14) pour délivrer un débit volumique de la pâte de confiserie,
un dispositif de réglage (10) pour régler l'intensité du débit volumique,
un dispositif de mesure (20) pour détecter une valeur réelle d'une caractéristique géométrique de la chaîne (19) sur le dispositif de convoyage (15) et
un dispositif de régulation (23) dans lequel la valeur réelle est saisie, le dispositif de régulation (23) comparant la valeur réelle à une valeur de consigne prédéfinie et, en fonction d'un écart entre la valeur réelle et la valeur de consigne, envoyant une commande au dispositif de réglage (10) pour modifier l'intensité du débit,
et avec une chambre de pression commune (8) recevant la masse de confiserie de la pluralité d'extrudeuses de masse de confiserie (1), la masse de confiserie dans la chambre de pression (8) étant sous surpression.

2. Unité d'extrusion de masse de confiserie (2) selon la revendication 1, **caractérisée en ce que** le dispositif de mesure (20) est un dispositif de mesure optique.

3. Unité d'extrusion de masse de confiserie (2) selon la revendication 1 ou 2, **caractérisée en ce que** le dispositif de mesure (20) est un dispositif de triangulation laser (21).

4. Unité d'extrusion de masse de confiserie (2) selon l'une des revendications précédentes, **caractérisée en ce que** le dispositif de réglage (10) est conçu et agencé de manière à permettre le réglage de l'intensité du débit volumique pendant le fonctionnement de l'extrudeuse de masse de confiserie (1).

5. Unité d'extrusion de masse de confiserie (2) selon l'une des revendications précédentes, **caractérisée en ce que** le dispositif de réglage (10) comprend un registre mobile (24) dont la position est variable pour régler l'intensité du débit volumique.

6. Unité d'extrusion de masse de confiserie (2) selon l'une des revendications précédentes, **caractérisée en ce que** le dispositif de réglage (20) comprend une vanne péristaltique (11) dont la section transversale libre est variable pour régler l'intensité du débit volumique.

7. Unité d'extrusion de masse de confiserie (2) selon l'une des revendications précédentes, **caractérisée en ce que** la caractéristique géométrique est la largeur et/ou la hauteur et/ou la géométrie de la section transversale de la chaîne (19).

8. Unité d'extrusion de masse de confiserie (2) selon l'une des revendications précédentes, **caractérisée en ce que** les extrudeuses de masse de confiserie (1) comportent un dispositif de régulation commun (23).

9. Unité d'extrusion de masse de confiserie (2) selon la revendication 8, **caractérisée en ce que** le dispositif de régulation (23) est conçu de telle sorte que les chaînes (19) ont des valeurs réelles de caractéristiques géométriques qui s'alignent les unes sur les autres.

10. Unité d'extrusion de masse de confiserie (2) selon l'une des revendications précédentes, **caractérisée en ce que** la chambre de pression (8) comporte une entrée et une sortie, l'entrée étant formée par des rouleaux de convoyage (6) entraînés en sens inverse et la sortie étant formée par les buses de sortie (14).
